# EUROPEAN PATENT SPECIFICATION

(11) **EP 0 616 318 B1**
(45) Date of publication and mention of the grant of the patent: **07.04.1999**
(21) Application number: 94101405.2
(22) Date of filing: 31.01.1994
(51) Int. Cl.: G11B 5/39

(54) **Magnetoresistive head**
Magnetoresistiver Kopf
Tête magnétorésistive

(30) Priority: 18.03.1993 JP 57602/93; 02.12.1993 JP 302637/93
(43) Date of publication of application: 21.09.1994
(73) Proprietor: FUJITSU LIMITED, Kawasaki-shi, Kanagawa 211 (JP)
(72) Inventor: Koshikawa, Takao, c/o Fujitsu Limited, Kawasaki-shi, Kanagawa 211 (JP); Ohtsuka, Yoshinori, c/o Fujitsu Limited, Kawasaki-shi, Kanagawa 211 (JP); Uehara, Yuji, c/o Fujitsu Limited, Kawasaki-shi, Kanagawa 211 (JP); Toda, Junzo, c/o Fujitsu Limited, Kawasaki-shi, Kanagawa 211 (JP); Mizoshita, Yoshifumi, c/o Fujitsu Limited, Kawasaki-shi, Kanagawa 211 (JP)
(74) Representative: Stebbing, Timothy Charles

(56) References cited:
- EP-A- 0 061 363
- EP-A- 0 114 997
- EP-A- 0 301 823
- EP-A- 0 411 914
- EP-A- 0 534 791
- WO-A-93/08562
- PATENT ABSTRACTS OF JAPAN vol. 013, no. 050 (P-823), 6 February 1989 & JP-A-63 241713 (TOSHIBA CORP), 7 October 1988,
- PATENT ABSTRACTS OF JAPAN vol. 011, no. 109 (P-564), 7 April 1987 & JP-A-61 258320 (HITACHI LTD), 15 November 1986,
- PATENT ABSTRACTS OF JAPAN vol. 009, no. 097 (P-352), 26 April 1985 & JP-A-59 221824 (SONY KK), 13 December 1984,
- PATENT ABSTRACTS OF JAPAN vol. 016, no. 313 (P-1383), 9 July 1992 & JP-A-04 087011 (NEC CORP), 19 March 1992,
- PATENT ABSTRACTS OF JAPAN vol. 009, no. 304 (P-409), 30 November 1985 & JP-A-60 136018 (SONY KK), 19 July 1985,
- PATENT ABSTRACTS OF JAPAN vol. 012, no. 329 (P-754), 7 September 1988 & JP-A-63 091818 (SHARP CORP), 22 April 1988,
- IBM TECHNICAL DISCLOSURE BULLETIN, vol. 26, no. 7A, December 1983, ARMONK, N.Y., US, pages 3127-3128, XP002020507 D. L. BEAM ET AL.: "Self-aligned two-step process for flux enhancement in magnetoresistive sensors"

## Description

The present invention relates to a thin-film magnetic head for use in magnetic recording and reproducing apparatus such as magnetic disk apparatus and magnetic tape apparatus and, more particularly, relates to a magnetoresistive head for reproducing recorded information on a record medium by the magnetoresistive effect.

Recently, with the advancement in magnetic disk apparatus smaller in size and higher in density, there are demands for implementation of contact recording/reproduction during which the head slider has a reduced flying height, i.e., the slider floats above a record medium very little or the slider contacts the record medium.

When the velocity of a magnetic disk (relative velocity between the head and medium) is decreased according as the magnetic disk is made smaller in diameter, a conventional magnetic inductive head reproduces a deteriorated output. Therefore, a magnetoresistive head (hereinafter briefly referred to as "MR head") which reproduces an output not dependent on the velocity and provides a high power output even when the disk is rotated at low velocity is desired to be developed.

An MR head supplies a constant sense current to a magnetoresistive element to convert changes in magnitude of a signal magnetic field leaked out from the record track of a record medium into changes in resistance and thereby reproduces information recorded on the record medium as changes in voltage. In conventional MR heads, a magnetoresistive element has been exposed in the surface of the head confronting the medium. Therefore, the recording and reproducing through very low flying height or contacting have been very difficult to realize while using a combination of such a head and a metallic record medium because of a short or discharge occurring in between.

Accordingly, the present inventors proposed in Japanese Laid-open Patent Publication No. Hei 5-114119 a flux-guided type magnetoresistive head in such an arrangement that the magnetoresistive element is not exposed in the surface of the head confronting the medium and a leakage magnetic field from the medium is guided by a flux guide formed of a soft magnetic material to the magnetoresistive element.

The MR head disclosed in the above laid-open patent publication includes a magnetoresistive element of Ni-Fe set back from the front end face of the head confronting a record medium and a pair of terminals connected with the magnetoresistive element defining a sense region of the magnetoresistive element therebetween, and a constant sense current is adapted to be supplied from one terminal to the other. The MR head further includes a flux guide having one end thereof exposed in the front end face of the head and the other end magnetically coupled to one end of the magnetoresistive element for guiding a magnetic flux from the record medium to the magnetoresistive element.

The flux guide, magnetoresistive element, and terminals are embedded in a nonmagnetic insulating layer and a pair, upper and lower, magnetic shields are provided so as to sandwich the nonmagnetic insulating layer therebetween. Further, there is defined a gap between the upper and lower magnetic shields for receiving the magnetic flux from the record medium in the front end face of the head.

The sense region of the magnetoresistive element defined by the pair of terminals is formed to be larger than the width of the record track on the record medium. The flux guide has, in its plan view, a trapezoidal form, a home plate form, a triangular form, and the like and arranged to be smaller in width than the sense region of the magnetoresistive element.

In the prior art flux guide type MR head disclosed in the above laid-open patent publication, since a flux guide smaller in width is used, it has been difficult to control magnetic domains therein. Consequently, there has been a problem that the reproduced output and reproduced waveform by the magnetoresistive element tend to vary by the multi-domain activities of the flux guide itself.

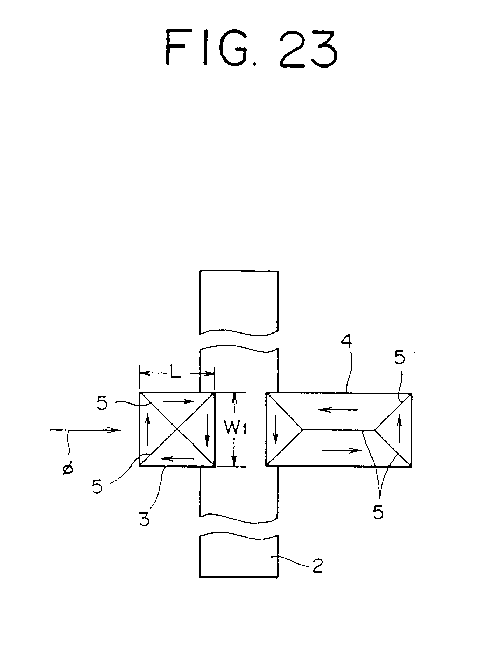

The above mentioned problem will be described below in detail with reference to FIG. 23. The magnetoresistive element 2 is magnetically coupled to one end of each of a front flux guide 3 and a back flux guide 4. Since the front flux guide 3 is restricted in its length L (a longer length L makes passage of a signal magnetic field Φ difficult), the front flux guide 3 has a form whose length L and width W₁ are virtually equal, i.e., a form close to a square.

Accordingly, the easy axis of magnetization, not shown, becomes unstable, and the signal magnetic field Φ incoming in the direction of the arrow in the diagram from the record track of a medium circulates as indicated by the arrows in the diagram in the front flux guide 3 and back flux guide 4 and, thereby, circulating magnetic domains partitioned by magnetic walls 5 are formed in each flux guide.

The phenomenon producing a plurality of circulating magnetic domains partitioned by magnetic walls 5 is called a multiple magnetic domain structure, whereas a magnetic domain structure in which the direction of magnetization is aligned with a definite direction and no magnetic wall is formed is called a single magnetic domain structure. Magnetic walls, when applied with an external magnetic field, move to minimize the magneto-static energy, but it becomes difficult for the magnetic wall 5 to smoothly move when there are present pin holes, projections and the like in the front and rear flux guides 3 and 4 and this causes noise .

Thus, in the MR head disclosed in the above laid-open patent publication, the easy axis of magnetization of the flux guide is unstable. Therefore, a multiple magnetic domain structure is produced in the flux guide and, hence, its response to the signal magnetic field Φ from the record medium becomes unstable. As a result, there has been such a difficulty that noise is mixed in the reproduced signal.

It is therefore desirable to provide a magnetoresistive head in which the above described problems in the prior art are solved and from which stabilized reproduced output and reproduced waveforms can be obtained.

It is further desirable to provide a magnetoresistive head in which occurrence of side crosstalk during the reproduction is restricted.

JP-A-63/241,713 discloses a magnetoresistive head according to the preamble of each of the accompanying independent claims.

According to a first aspect of the present invention, there is provided a magnetoresistive head for reproducing information recorded on a record medium comprising: a magnetoresistive element for converting a signal magnetic field leaking out from a record track of the record medium into changes in resistance, said magnetoresistive element being set back from a front end face of said head confronting said record medium; a pair of terminals connected to said magnetoresistive element and defining a sense region of the magnetoresistive element therebetween; and a front flux guide, one end thereof being exposed in the front end face of said head and the other end thereof being magnetically coupled to one end of said magnetoresistive element, for guiding magnetic flux from the record medium to said magnetoresistive element; said front flux guide being shaped virtually in the form of a rectangle elongated in a direction of the width of the record track of said record medium so as to exceed the sense region of said magnetoresistive element and a direction of the easy axis of magnetisation of said front flux guide being parallel to the direction of the width of the record track,
characterised in that: said front flux guide has a projected portion whose exposed front end portion has a width smaller than the width of the record track, and wherein said front flux guide is exposed in the front end face of said head only at said projected portion and set back from said front end face at the remaining portion.

According to a second aspect of the present invention, there is provided a magnetoresistive head for reproducing information recorded on a record medium comprising: a magnetoresistive element for converting a signal magnetic field leaking out from a record track of the record medium into changes in resistance, said magnetoresistive element being set back from a front end face of said head confronting said record medium; a pair of terminals connected to said magnetoresistive element and defining a sense region of the magnetoresistive element therebetween; and a front flux guide, one end thereof being exposed in the front end face of said head and the other end thereof being magnetically coupled to one end of said magnetoresistive element, for guiding magnetic flux from the record medium to said magnetoresistive element; said front flux guide being shaped virtually in the form of a rectangle elongated in a direction of the width of the record track of said record medium so as to exceed the sense region of said magnetoresistive element and a direction of the easy axis of magnetisation of said front flux guide being parallel to the direction of the width of the record track,
characterised in that: said front flux guide has a central exposed portion having a width smaller than the width of the record track and exposed in said front end face, and wherein a front edge of said front flux guide is arranged to be progressively apart from the front end face of said head as it goes from the central exposed portion toward both ends.

Reference is made, by way of example, to the accompanying drawings depicting first to twenty-first magnetoresistive heads useful for understanding the invention or embodying the invention, and in which:
FIG. 1A is a schematic plan view of a first magnetic head useful for understanding the invention;
FIG. 1B is a sectional view taken along line B-B of FIG. 1A;
FIG. 2A is a schematic plan view of a second MR head useful for understanding the invention;
FIG. 2B is a sectional view taken along line B-B of FIG. 2A;
FIG. 3 is a sectional view of a third MR head useful for understanding the invention;
FIG. 4 is a sectional view of a fourth MR head useful for understanding the invention;
FIG. 5 is a plan view of a fifth MR head useful for understanding the invention;
FIG. 6A is a sectional view taken along line A-A of FIG. 5;
FIG. 6B is a sectional view taken along line B-B of FIG. 5;
FIG. 6C is a sectional view taken along line C-C of FIG. 5;
FIG. 7 is a sectional view of a sixth MR head useful for understanding the invention;
FIG. 8 is a sectional view of a seventh MR head useful for understanding the invention;
FIG. 9A is a schematic plan view of an eighth MR head useful for understanding the invention;
FIG. 9B is a sectional view taken along line B-B of FIG. 9A;
FIG. 10A is a schematic plan view of a ninth MR head useful for understanding the invention;
FIG. 10B is a sectional view taken along line B-B of FIG. 10A;
FIG. 11 is a plan view of a tenth magnetic head, embodying the present invention;
FIG. 12 is a plan view of an eleventh magnetic head, also embodying the invention;
FIG. 13 is a plan view of a twelfth MR head useful for understanding the invention;
FIG. 14 is a plan view of a thirteenth MR head useful for understanding the invention;
FIG. 15 is a plan view of a fourteenth MR head useful for understanding the invention;
FIG. 16 is a plan view of a fifteenth MR head useful for understanding the invention;
FIG. 17 is a plan view of a sixteenth magnetic head, embodying the invention;
FIG. 18 is a plan view of a seventeenth MR head useful for understanding the invention;
FIG. 19 is a plan view of an eighteenth MR head useful for understanding the invention;
FIG. 20 is a plan view of a nineteenth magnetic head, embodying the invention;
FIG. 21 is a plan view of a twentieth magnetic head, embodying the invention;
FIG. 22A is a schematic plan view of a twenty-first magnetic head, enbodying the invention;
FIG. 22B is a sectional view taken along line A-A of FIG. 22B; and
FIG. 23 is a diagram explanatory of problems in a prior art example.

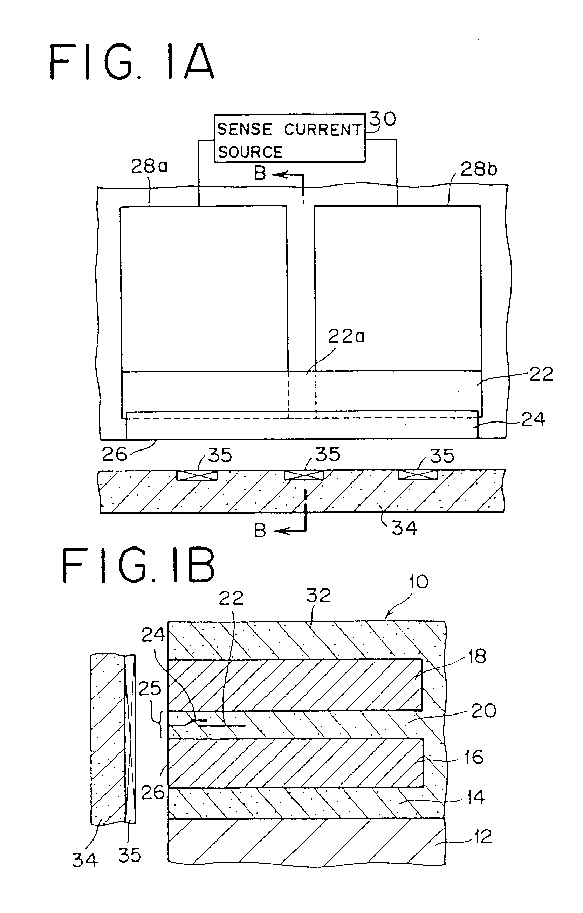

FIG. 1A shows a schematic plan view of an MR head 10 useful for understanding the invention and FIG. 1B shows a sectional view taken along line B - B of FIG. 1A. For example, on a conducting substrate 12 made of alumina-titanium carbide (Al₂O₃-TiC) is deposited an insulating layer 14 made for example of alumina (Al₂O₃). Reference numerals 16 and 18 denote a first and a second magnetic shield formed for example of nickel-iron (Ni-Fe) with a nonmagnetic insulating layer 20 made of alumina (Al₂O₃) interposed therebetween.

The first and second magnetic shields 16 and 18 define a gap 25 in the front end face (the face confronting a medium) 26 of the head 10 to improve the resolution in reproduction. Within the nonmagnetic insulating layer 20, there is embedded a magnetoresistive element 22 formed for example of nickel-iron (Ni-Fe) kept apart from the front end face 26 of the head 10.

Within the nonmagnetic insulating layer 20, there is further embedded a front flux guide 24 formed for example of nickel-iron (Ni-Fe), of which one end is exposed in the front end face 26 of the head 10 and the other end is magnetically coupled to one end of the magnetoresistive element 22. The front flux guide 24 guides the magnetic flux from the record medium 34 to the magnetoresistive element 22.

The front flux guide 24, as is made apparent by reference to FIG. 1A, is shaped in the form of a rectangle elongated sideways along the front edge of the magnetoresistive element 22. The distance between the front flux guide 24 and magnetoresistive element 22 overlapping with each other is for example around 0.05 to 0.2µm.

The sense region 22a of the magnetoresistive element 22 is determined by the distance between a pair of terminals 28a and 28b and its width is formed to be smaller than the width of the record track 35 of the record medium 34. The terminals 28a and 28b are connected to a sense current source 30 and the magnetoresistive element 22 is supplied with a constant sense current from the sense current source 30. The terminals 28a and 28b are formed for example of Au, Cu, Al, and the like.

An insulating protecting film 32 made for example of alumina (Al₂O₃) is deposited over the second magnetic shield 18 to complete a magnetoresistive head 10. The head 10 is fabricated by the well known thin film process.

The signal magnetic flux from the record track 35 of the record medium 34 is applied to the head 10, guided along the front flux guide 24 to flow into the magnetoresistive element 22, and thereby the magnetoresistive element 22 is magnetized. The magnetic flux passing through the magnetoresistive element 22 is absorbed by the first and second magnetic shields 16 and 18.

The magnetoresistive element 22 changes its resistance value according to changes in the magnitude of the signal magnetic flux. Since a constant sense current from the sense current source 30 is supplied to the magnetoresistive element 22, the voltage between the terminals 28a and 28b changes with changes in the resistance value and, thereby, information recorded on the record medium 34 can be reproduced as a voltage signal.

Since the front flux guide 24 is shaped in the form of a rectangle elongated sideways so as to exceed the width of the sense region 22a and the record track 35, its easy axis of magnetization can be oriented to the direction parallel to the width of the record track 35 by virtue of the form and anisotropy of the front flux guide 24 and, thereby, a single magnetic domain structure can be realized easily.

Thus, variations in the magnetic domains of the front flux guide 24 can be prevented and, hence, variations in the reproduced output and reproduced waveform by the magnetoresistive element due to the variations in the magnetic domains can be prevented. Further, since the width of the sense region 22a of the magnetoresistive element 22 is formed to be smaller than the width of the record track 35, the side crosstalk from adjoining record tracks to the record track 35 to be reproduced can be effectively suppressed.

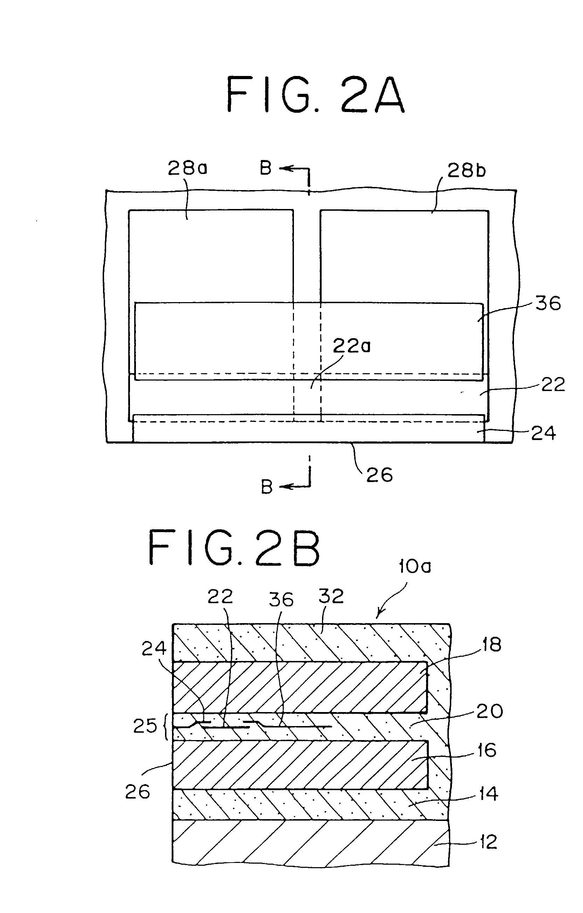

A second MR head 10 useful for understanding the invention will be described below with reference to FIGS. 2A and 2B. In this MR head and a number of others to be described hereinafter, those component parts essentially the same as those in the first MR head shown in FIGS. 1A and 1B will be denoted by like reference numerals and description of them will be omitted to avoid duplication.

This MR head is such that is obtained by adding a back flux guide 36 to the first MR head shown in FIGS. 1A and 1B. The back flux guide 36 is formed of nickel-iron (Ni-Fe) like the front flux guide 24 and its one end is magnetically coupled to the magnetoresistive element 22. In this MR head, by virtue of the additionally provided back flux guide 36, a meritorious effect, on top of the effects obtained from the above described first MR head, can be obtained that the demagnetizing field of the magnetoresistive element 22 is suppressed and the reproducing efficiency is improved.

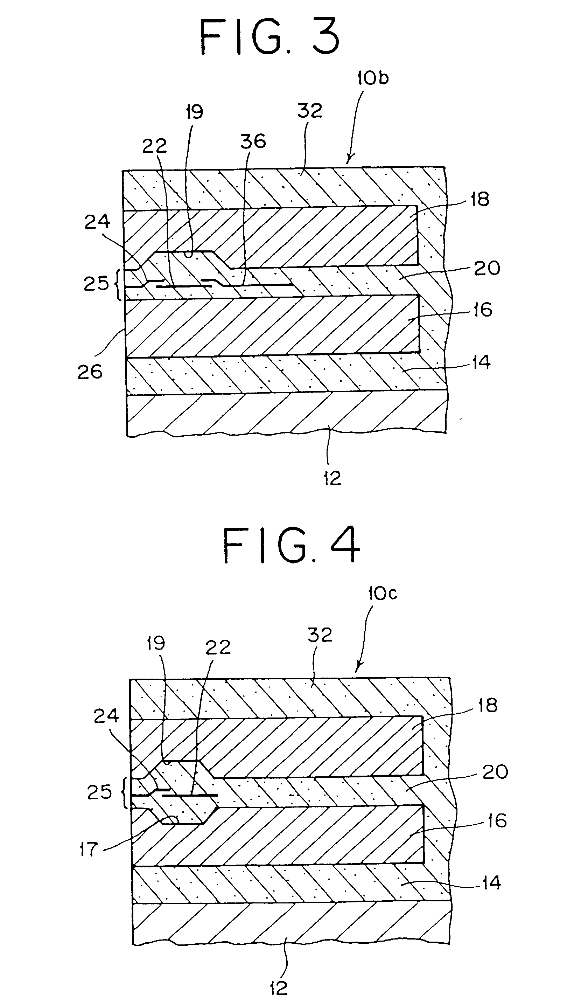

Referring to FIG. 3, there is shown a sectional view of a third MR head 10b useful for understanding the invention.

There is formed a recess 19 in the inner face of the second magnetic shield 18 confronting the magnetoresistive element 22 and the distance between the first and second magnetic shields 16 and 18 is enlarged at the portion around the magnetoresistive element 22. By virtue of the described arrangement, the magnetic flux from the magnetoresistive element 22 and the front and back flux guides 24 and 36 is suppressed from leaking out so that the reproducing efficiency can be improved.

Further, since the magnetoresistive element 22 is arranged to be closer to the first magnetic shield 16 than to the second magnetic shield 18, it is achieved to apply a magnetic bias, so-called self-bias, to the magnetoresistive element 22 by virtue of the magnetic fields from the first and second magnetic shields 16 and 18, which are magnetized by the magnetic field due to the sense current.

Referring to FIG. 4, there is shown a sectional view of a fourth MR head 10c useful for understanding the invention. This MR head is of such a configuration that the first and second magnetic shields 16 and 18 have recesses 17 and 19, formed at the portions where they confront the magnetoresistive element 22, respectively, and thereby the distance between the first and second magnetic shields 16 and 18 around the portion where they face to the magnetoresistive element 22 is made larger.

On the side opposite to the side where the magnetoresistive element 22 is coupled to the front flux guide 24, the distance between the first and second magnetic shields 16 and 18 is made smaller so that the magnetoresistive element 22 is coupled to the first and second magnetic shields 16 and 18.

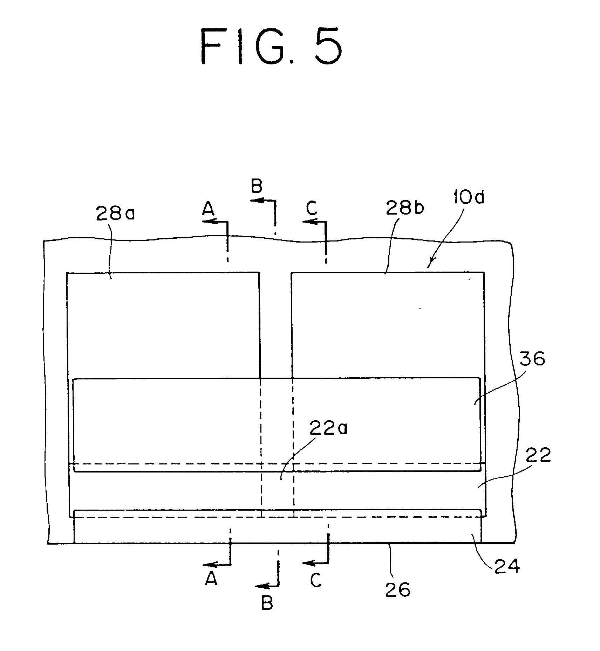

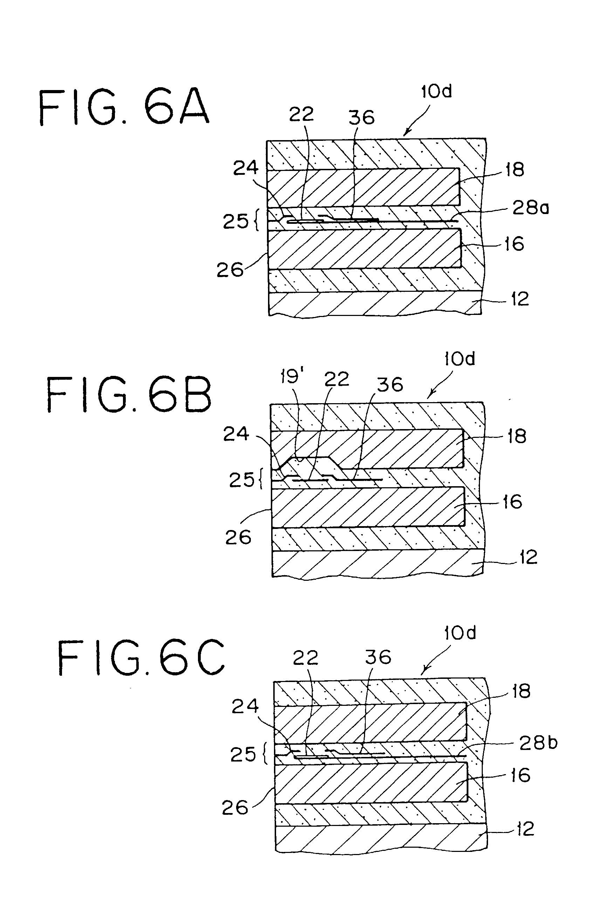

Referring to FIG.5 and FIGS. 6A to 6C, a fifth MR head 10d useful for understanding the invention will be described. FIG. 5 is a schematic plan view of the MR head 10d and FIGS. 6A, 6B and 6C are sectional views taken along lines A-A, B-B, and C-C of FIG. 5. This MR head is arranged such that not only the distance between the first and second magnetic shields 16 and 18 is changed in the direction virtually vertical to the surface of the record medium 34 but also the distance between the first and second magnetic shields 16 and 18 is changed in the direction of the width of the record track 35.

More specifically, as shown in FIG. 6B, a recess 19' is formed in the inner face of the second magnetic shield 18 at the portion where it confronts the sense region 22a of the magnetoresistive element 22, so that the distance between the first and second magnetic shields 16 and 18 is made larger in the sense region 22a of the magnetoresistive element 22 and, as apparent from FIG. 6A and FIG. 6C, the distance between the shields is made smaller in the other portions.

Also in this MR head the self-bias for the magnetoresistive element 22 is provided as with the third MR head of FIG. 3, and the effect to suppress side crosstalk is obtained because the distance between the first and second magnetic shields 16 and 18 is narrowed at other portions than the sense region.

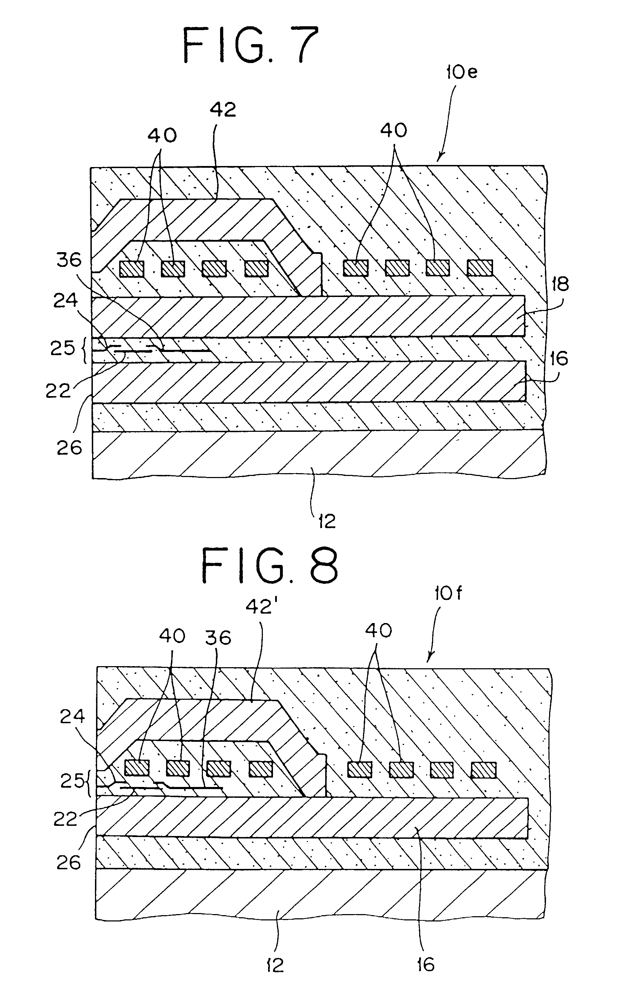

FIG. 7 is a sectional view of a sixth MR head 10e useful for understanding the invention, which is of a configuration to be obtained by adding a coil 40 for recording information to the MR head 10a of the second MR head shown in FIG. 2. Reference numeral 42 denotes a magnetic pole one end of which is exposed in the front end face 26 of the MR head 10e and the other end of which is coupled to the second magnetic shield 18 and the conductor coil 40 is wound round the portion where the magnetic pole 42 is coupled to the second magnetic shield 18 having this portion virtually in the center.

According to the MR head 10e of FIG. 7, by allowing a current modulated with the information to be recorded to flow through the coil 40, a magnetic field corresponding to the value of the current flow is induced and, thereby, the information can be magnetically recorded along the record track 35 of the record medium 34 shown in FIG. 1.

FIG. 8 shows a sectional view of a seventh MR head 10f useful for understanding the invention. This head is such that is obtained by eliminating the second magnetic shield 18 in FIG. 7, and a magnetic pole 42' in this case is arranged to serve also as the second magnetic shield. The shield-and-magnetic pole 42' is coupled to the first magnetic shield 16 at a portion kept apart from the front end face 26 of the head and the coil 40 is wound round the portion of coupling having this portion virtually in the center.

Since the second magnetic shield 18 is eliminated and the shield-and-magnetic pole 42' is employed, a combination type MR head for recording and reproduction suitable for a high packing density application can be provided.

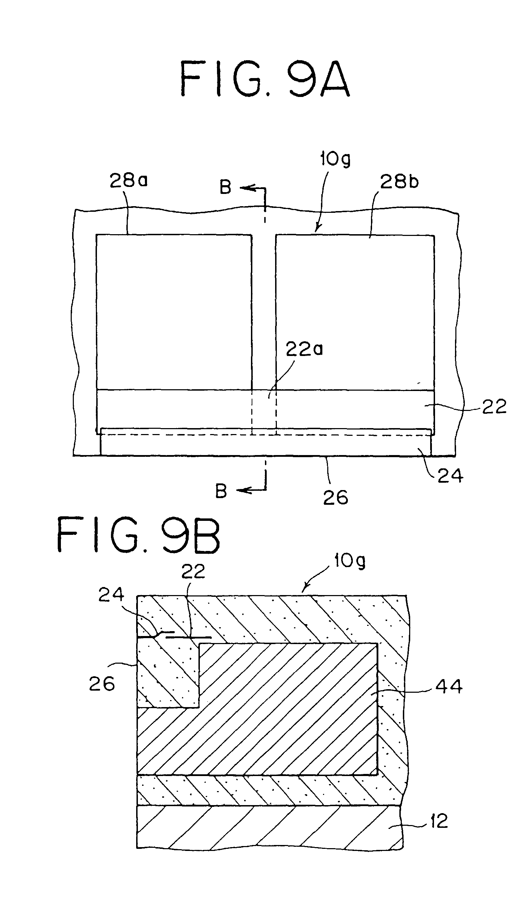

FIG. 9A is a schematic plan view of an eighth MR head 10g useful for understanding the invention and FIG. 9B is a sectional view taken along line B-B of FIG. 9A. This MR head is suitable for reproducing perpendicular recording, i.e., information recorded by magnetizing a record medium in the perpendicular direction. The MR head 10g includes a front flux guide 24 exposed in the front end face 26 of the head confronting the record medium, a magnetoresistive element 22 set back from the front end face 26 of the head and magnetically coupled to the front flux guide 24, and a return yoke 44 magnetically coupled to the magnetoresistive element 22 for returning the magnetic flux to the record medium.

Since the front flux guide 24 is shaped in a rectangle elongated in the direction of the width of the record track so as to exceed the sense region 22a of the magnetoresistive element 22, this MR head can give the meritorious effects as obtained from the MR head shown in FIG. 1.

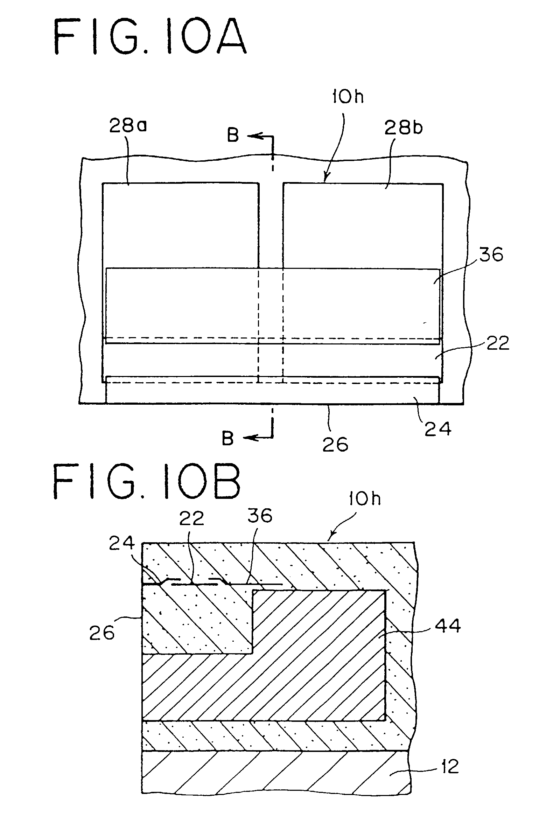

FIGS. 10A and 10B show a ninth MR head 10h useful for understanding the invention, which is obtained by adding a back flux guide 36 to the MR head log of the MR head shown in FIGS. 9A and 9B. Also this MR head, like the one shown in FIGS. 9A and 9B, is suitable for reproduction of perpendicular recording. By addition of the back flux guide 36, the demagnetising field of the magnetoresistive element 22 is suppressed and, hence, the reproducing efficiency can be improved.

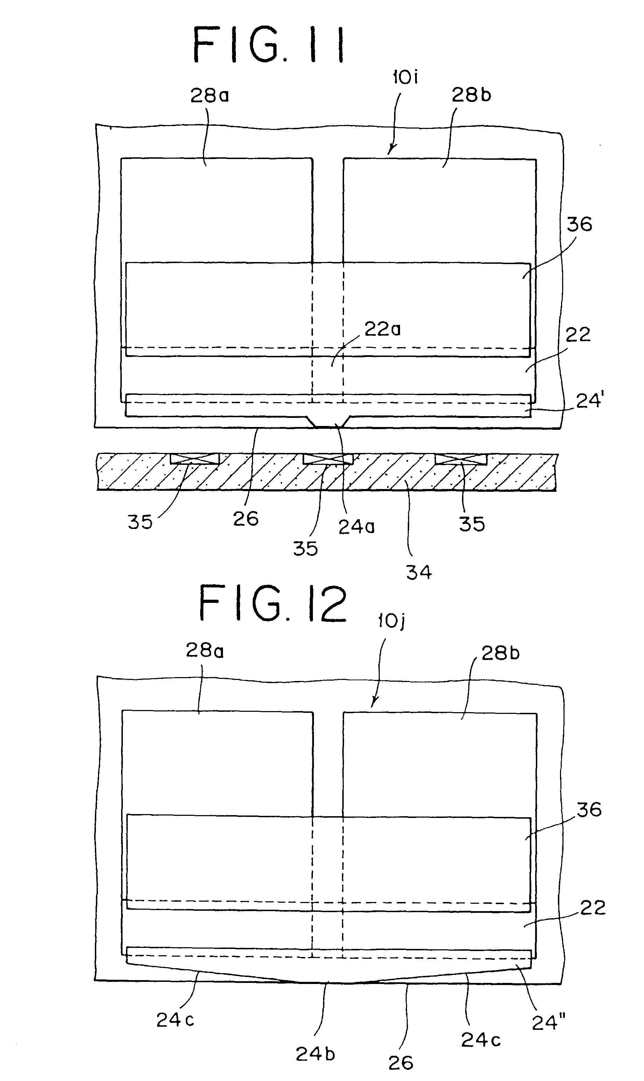

FIG. 11 shows a schematic plan view of a tenth MR head 10i, which is an embodiment of the invention. The front flux guide 24' of this embodiment has a central projected portion 24a shaped in the form of a trapezoid and only this central projected portion 24a is exposed in the front end face 26 of the head 10i. The exposed width of the projected portion 24a is formed to be smaller than the width of the record track 35.

In the embodiment described above, the width of the sense region 22a of the magnetoresistive element 22 defined by the terminals 28a and 28b is formed to be smaller than the width of the record track 35. Since, in the present embodiment, the front flux guide 24' is exposed in the front end face 26 of the head only at its central projected portion 24a, side crosstalk is effectively suppressed.

FIG. 12 shows a schematic plan view of an eleventh MR head 10j, which is another embodiment of the invention. This embodiment is a modification of the embodiment shown in FIG. 11. The front flux guide 24" of this embodiment has a central exposed portion 24b exposed in the front end face 26 of the head of a size smaller than the width of the record track, and its front edge 24c is arranged to be progressively apart from the front end face 26 of the head as it goes from the central exposed portion 24b toward both ends.

In the embodiment shown in FIG. 11, the magnetic domain controllability is deteriorated to a certain degree because the central projected portion 24a in a trapezoidal form is provided therein, but the front flux guide 24" in the present embodiment has no angled portion and, therefore, the magnetic domain controllability is not deteriorated.

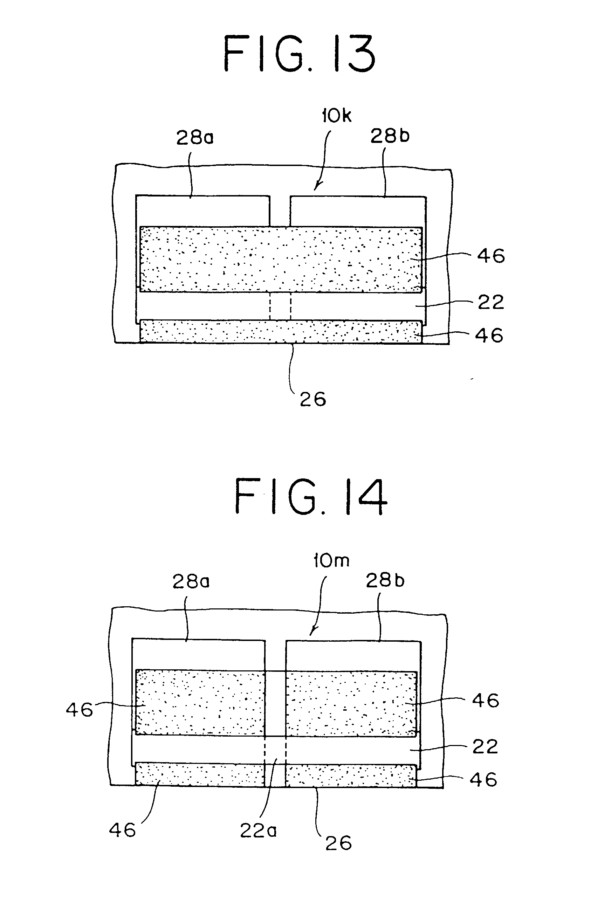

FIG. 13 shows a schematic plan view of a twelfth MR head 10k, which is useful for understanding the invention, and in which the front and back flux guides have antiferromagnetic films 46 of FeMn, NiO, MnO, Cr₂O₃, FeS, or the like deposited over the whole surfaces. The magnetic field in the direction of the width of the record track is applied to the front and back flux guides by the exchange interaction between the antiferromagnetic films 46 and the front and back flux guides and, thereby, stabilisation of magnetic domains in the flux guides is enhanced. More specifically, the easy axis of magnetisation of the front and back flux guides is stably aligned with the direction of the width of the track.

FIG. 14 shows a schematic plan view of a thirteenth MR head 10m useful for understanding the invention, in which antiferromagnetic films 46 are deposited over the front and back flux guides except their portions whose width is virtually equal to the sense region 22a of the magnetoresistive element 22. According to this MR head, stabilisation of the magnetic domains in the front and back flux guides can be achieved without causing the permeability of the magnetoresistive element 22 to be lowered at its sense region 22a.

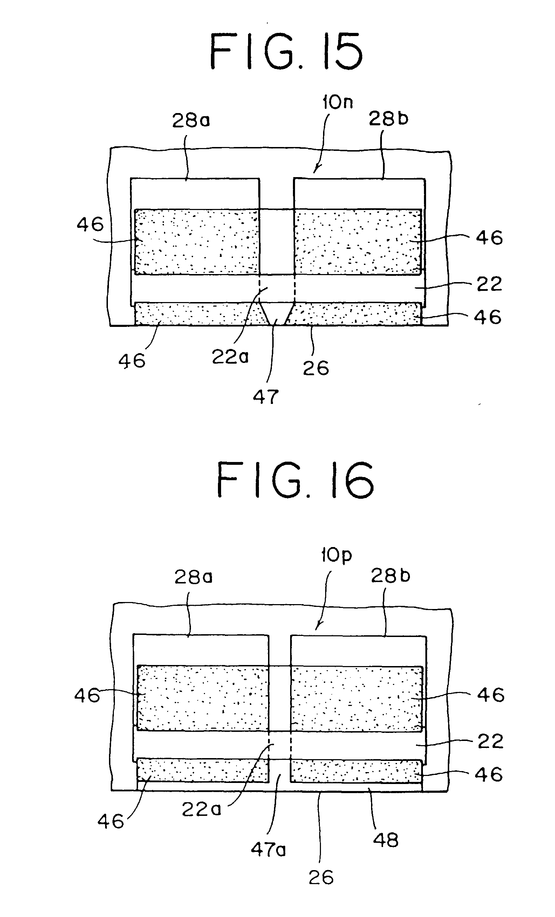

FIG. 15 shows a schematic plan view of a fourteenth MR head 10n useful for understanding the invention, in which the width of the portion of the flux guide over which the antiferromagnetic film 46 is not deposited is changed between the side of the front end face 26 confronting the medium and the side of the magnetoresistive element 22.

In this MR head, the width of the sense region 22a of the magnetoresistive element 22 is formed to be larger than the width of the record track. The width of the central portion in the trapezoidal form 47 of the front flux guide over which no antiferromagnetic film 46 is deposited is formed to be smaller than the width of the record track in the front end face 26 and to be virtually equal to the width of the sense region 22a of the magnetoresistive element 22 on the side where it is coupled to the magnetoresistive element 22.

FIG. 16 shows a schematic plan view of a fifteenth MR head 10p useful for understanding the invention, in which an antiferromagnetic film 46 is deposited over the front flux guide except its central portion 47a whose width is correspondent to the width of the sense region 22a of the magnetoresistive element 22 and its front edge portion 48 with a predetermined width.

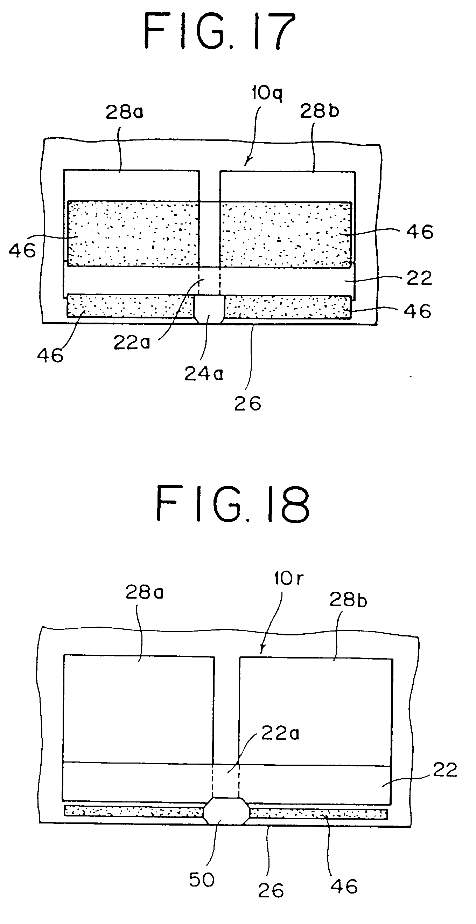

FIG. 17 shows a schematic plan view of a sixteenth MR head 10q, which is an embodiment of the invention. In this embodiment, the same as in the embodiment shown in FIG. 11, only a central projected portion 24a of the front flux guide is exposed in the front end face 26 of the head confronting the medium. Antiferromagnetic films 46 are deposited on the surface of the front flux guide except the central projected portion 24a and over the back flux guide except its portion having a width correspondent to the width of the sense region 22a of the magnetoresistive element 22.

FIG. 18 shows a schematic plan view of a seventeenth MR head 10r useful for understanding the invention. In this MR head, the front flux guide is exposed in the front end face 26 of the head confronting the medium only at its central portion 50, while the other portion of the front flux guide is set back from the front end face 26. Further, the front flux guide is overlapping with the magnetoresistive element 22 only at its central portion 50 to be coupled to the same, while, in the other portion, the front flux guide is separated from the magnetoresistive element 22.

Further, an antiferromagnetic film 46 is deposited over the front flux guide except its central portion 50. According to this MR head, since the front flux guide is magnetically coupled to the magnetoresistive element 22 only at the central portion 50 corresponding to the sense region 22a of the magnetoresistive element 22, side crosstalk can be effectively suppressed.

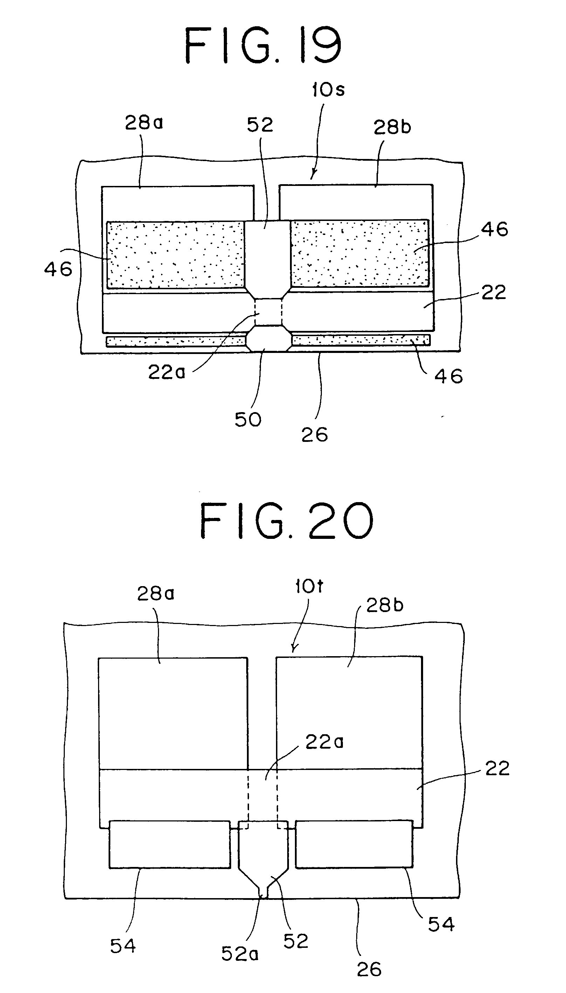

FIG. 19 shows a schematic plan view of an eighteenth MR head 10s useful for understanding the invention. This MR head is such that it is obtained by adding a back flux guide to the seventeenth MR head of FIG. 18. The back flux guide is also overlapping with the magnetoresistive element 22 only at the central portion 52 and separated from the same in the other portion, and the back flux guide has an antiferromagnetic film 46 deposited thereon except the central portion 52.

FIG. 20 shows a schematic plan view of a nineteenth MR head 10t, which is another embodiment of the invention. In this embodiment, a front flux guide 52 virtually in the form of a home plate is used in place of the front flux guide 24 in the form of a rectangle in the above described embodiments, and it is magnetically coupled to the magnetoresistive element 22 at the portion around the sense region 22a of the magnetoresistive element 22.

The front flux guide 52 has a signal reading portion 52a exposed in the front end face 26 confronting the medium and the width of the signal reading portion 52a is formed to be smaller than the width of the record track. On both sides of the front flux guide 52, there are disposed a pair of magnetic films 54 along the magnetoresistive element 22 and these magnetic films 54 are magnetically coupled to the magnetoresistive element 22.

While the front flux guide 52 virtually in the form of a home plate is employed in the present embodiment, by virtue of the pair of magnetic films 54 disposed on both sides of the front flux guide 52, the easy axis of magnetisation of the front flux guide 52 can be easily aligned with the direction parallel to the width of the record track. The magnetic film 54 can be formed of CoCrTa, CoCrPt, iron garnet, ferromagnetic film, or the like.

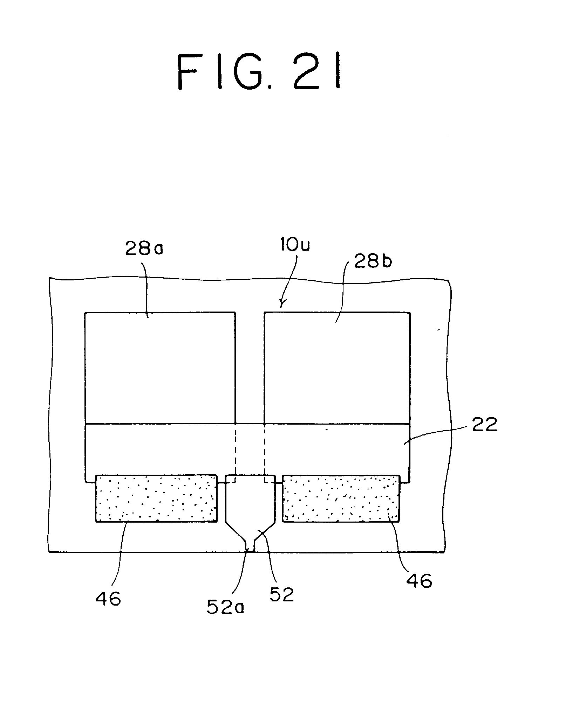

FIG. 21 shows a schematic plan view of a twentieth MR head 10u which is another embodiment of the invention, and is obtained by depositing antiferromagnetic films 46 over the soft magnetic films 54 shown in FIG. 20. By depositing the antiferromagnetic films 46 over the magnetic films 54, the easy axis of magnetisation of the front flux guide 52 can be aligned with the direction of the width of the record track in more stabilised manner.

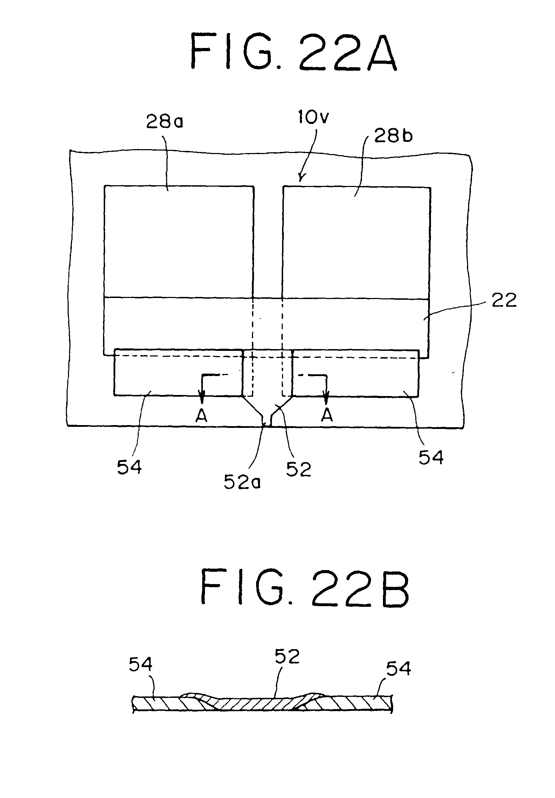

FIG. 22A shows a schematic plan view of a twenty-first MR head 10v, which is a further embodiment of the invention, and a modification of the MR head in FIG. 20. In this embodiment, as best shown in FIG. 22B the front flux guide 52 is formed so as to cover up portions of a pair of magnetic films 54 disposed on both sides of the front flux guide 52 along the length of the magnetoresistive element 22. As a matter of course, it may also be arranged inversely such that the magnetic films 54 cover up end portions of the flux guide 52.

Since the front flux guide 52 is formed so as to partly overlap with the pair of magnetic films 54, the easy axis of magnetisation of the front flux guide 52 can be controlled more efficiently.

While in the above described MR heads an antiferromagnetic film has been deposited on the front flux guide 24 and the back flux guide 36, a permanent magnet film or ferromagnetic film may be deposited in place of the antiferromagnetic film.

According to the present invention, as described above, it is made possible to stably align the easy axis of magnetisation, which is essential for realization of a single magnetic domain structure in the flux guide, with the direction parallel to the width of the record track of the medium. Therefore, the variations in the reproduced output and reproduced waveform by the magnetoresistive element due to variations in magnetic domains in the flux guide can be effectively prevented. Accordingly, it is made possible to provide a magnetoresistive head which performs an extremely stabilised function of responding to the signal magnetic field from the record medium during the reproduction.

## Claims

1. A magnetoresistive head (10) for reproducing information recorded on a record medium (34), comprising:
a magnetoresistive element (22) for converting a signal magnetic field leaking out from a record track (35) of the record medium (34) into changes in resistance, said magnetoresistive element (22) being set back from a front end face (26) of said head confronting said record medium (34); a pair of terminals (28a, 28b) connected to said magnetoresistive element (22) and defining a sense region (22a) of the magnetoresistive element therebetween; and a front flux guide (24), one end thereof being exposed in the front end face (26) of said head and the other end thereof being magnetically coupled to one end of said magnetoresistive element (22), for guiding magnetic flux from the record medium (34) to said magnetoresistive element (22); said front flux guide (24) being shaped virtually in the form of a rectangle elongated in a direction of the width of the record track (35) of said record medium (34) so as to exceed the sense region (22a) of said magnetoresistive element (22) and a direction of the easy axis of magnetisation of said front flux guide (24) being parallel to the direction of the width of the record track (35);
characterised in that: said front flux guide (24) has a projected portion (24a) whose exposed front end portion has a width smaller than the width of the record track (35), and in that said front flux guide (24) is exposed in the front end face (26) of said head only at said projected portion (24a) and set back from said front end face at the remaining portion.

2. A magnetoresistive head according to claim 1, further comprising a back flux guide (36), one end thereof being magnetically coupled to the other end of said magnetoresistive element (22), wherein said back flux guide is shaped virtually in the form of a rectangle elongated in the direction of the width of the record track (35) of said record medium (34) so as to exceed the sense region (22a) of the magnetoresistive element (22), and a direction of the easy axis of magnetisation of said back flux guide (36) is parallel to the direction of the width of the record track (35).

3. A magnetoresistive head (10) for reproducing information recorded on a record medium (34), comprising:
a magnetoresistive element (22) for converting a signal magnetic field leaking out from a record track (35) of the record medium (34) into changes in resistance, said magnetoresistive element (22) being set back from a front end face (26) of said head confronting said record medium (34); a pair of terminals (28a, 28b) connected to said magnetoresistive element (22) and defining a sense region (22a) of the magnetoresistive element therebetween; and a front flux guide (24), one end thereof being exposed in the front end face (26) of said head and the other end thereof being magnetically coupled to one end of said magnetoresistive element (22), for guiding magnetic flux from the record medium (34) to said magnetoresistive element (22); said front flux guide (24) being shaped virtually in the form of a rectangle elongated in a direction of the width of the record track (35) of said record medium (34) so as to exceed the sense region (22a) of said magnetoresistive element (22) and a direction of the easy axis of magnetisation of said front flux guide (24) being parallel to the direction of the width of the record track (35),
characterised in that: said front flux guide (24) has a central exposed portion (24b) having a width smaller than the width of the record track and exposed in said front end face (26), and in that a front edge of said front flux guide (24) is arranged to be progressively apart from the front end face of said head as it goes from the central exposed portion (24b) toward both ends.

4. A magnetoresistive head according to claim 2, further comprising magnetic films (46) deposited over whole surfaces of said front flux guide (24) and said back flux guide (36), said magnetic films being selected from a group consisting of an antiferromagnetic film, a permanent magnet film, and a ferrimagnetic film.

5. A magnetoresistive head according to claim 1, further comprising a magnetic film (46) deposited over a surface of said front flux guide (24) except a portion corresponding to the width of the sense region (22a) of said magnetoresistive element (22), said magnetic film being selected from a group consisting of an antiferromagnetic film, a permanent magnet film, and a ferrimagnetic film.

6. A magnetoresistive head according to claim 2, further comprising magnetic films (46) deposited over surfaces of said front flux guide (24) and back flux guide (36) except portions corresponding to the width of the sense region (22a) of said magnetoresistive element (22), said magnetic films being selected from a group consisting of an antiferromagnetic film, a permanent magnet film, and a ferrimagnetic film.

7. A magnetoresistive head according to claim 1, further comprising:
a magnetic film (46) deposited over a surface of said front flux guide (24) except a central portion (47), whose width at its one end is smaller than the width of the record track (35) and at the other end is virtually equal to the width of the sense region (22a), said magnetic film (46) being selected from a group consisting of an antiferrimagnetic film, a permanent magnet film, and a ferrimagnetic film.

8. A magnetoresistive head according to claim 1, further comprising a magnetic film (46) deposited over a surface of said front flux guide (24) except a central portion (47a) having a width corresponding to the width of the sense region (22a) of said magnetoresistive element (22) and a front edge portion (48) having a predetermined width, said magnetic film (46) being selected from a group consisting of an antiferromagnetic film, a permanent magnet film, and a ferrimagnetic film.

9. A magnetoresistive head according to claim 3, further comprising a magnetic film (46) deposited over a whole surface of said front flux guide except said projected portion (24a), said magnetic film being selected from a group consisting of an antiferromagnetic film, a permanent magnet film, and a ferrimagnetic film.

10. A magnetoresistive head according to claim 2, wherein at least one of said front flux guide (24) and said back flux guide (36) is overlapping with said magnetoresistive element (22) at least at a portion (50) corresponding to the width of the sense region (22a) of said magnetoresistive element.

11. A magnetoresistive head according to any preceding claim, wherein the width of said sense region (22a) of said magnetoresistive element (22) is smaller than the width of the record track (35) of the record medium (34).

12. A magnetoresistive head according to any preceding claim, further comprising:
a nonmagnetic insulating layer (20) having said magnetoresistive element (22) and said terminals (28a, 28b) embedded therein; and
first and second magnetic shields (16, 18) having said nonmagnetic insulating layer (20) interposed therebetween and defining a gap (25) in the front end face (26) of said head for receiving magnetic flux from the record medium (34).

13. A magnetoresistive head according to claim 12, wherein a distance between said first and second magnetic shields (16, 18), at least in the sense region (22a) of said magnetoresistive element (22), is formed to be larger than a distance therebetween in the front end face (26) and said magnetoresistive element (22)is set closer to said first magnetic shield (16).

14. A magnetoresistive head according to claim 12, wherein a distance between said first and second magnetic shields (16, 18) at a portion where they confront said magnetoresistive element (22) is formed to be larger than a distance therebetween in the front end face (26) and said magnetoresistive element (22) is set closer to said first magnetic shield (16).

15. A magnetoresistive head according to claim 13, further comprising supply means (30) connected to said pair of terminals (28a, 28b) for supplying a constant sense current to said magnetoresistive element (22), wherein
said magnetoresistive element is magnetically biased by said first and second magnetic shields (16, 18) magnetized by a magnetic field due to said sense current.

16. A magnetoresistive head according to claim 12, wherein said second magnetic shield (18) is coupled to said first magnetic shield (16) at an end portion opposite to another end portion where said gap (25) is defined, and wherein a distance between said first and second magnetic shields (16, 18) in a middle portion between the another end portion at which the gap (25) is defined and the end portion at which the coupling is made is formed to be larger than a distance at the another end portion where the gap (25) is defined, said magnetoresistive head further comprising:
a conductor coil (40) for recording wound round the end portion at which the coupling is made, having that end portion virtually at its center.

17. A magnetoresistive head according to any preceding claim, further comprising:
a return yoke (44) magnetically coupled to the other end of said magnetoresistive element (22) for returning magnetic flux passed through said magnetoresistive element to the record medium (34).

18. A magnetoresistive head according to claim 17 as appended to claim 2, wherein said return yoke is magnetically coupled to said rear flux guide.

## Patentansprüche

1. Magnetoresistiver Kopf (10) zum Reproduzieren von Informationen, die auf einem Aufzeichnungsmedium (34) aufgezeichnet sind, der umfaßt:
ein magnetoresistives Element (22) zum Konvertieren eines Signalmagnetfeldes, das aus einer Aufzeichnungsspur (35) des Aufzeichnungsmediums (34) austritt, in Widerstandsveränderungen, welches magnetoresistive Element (22) von einer vorderen Endfläche (26) des Kopfes, die dem Aufzeichnungsmedium (34) gegenüberliegt, zurückgesetzt ist; ein Paar von Anschlüssen (28a, 28b), die mit dem magnetoresistiven Element (22) verbunden sind und eine Lesezone (22a) des magnetoresistiven Elementes zwischen sich definieren; und eine vordere Flußführung (24), deren ein Ende in der vorderen Endfläche (26) des Kopfes exponiert ist und deren anderes Ende mit einem Ende des magnetoresistiven Elementes (22) magnetisch gekoppelt ist, zum Führen des Magnetflusses von dem Aufzeichnungsmedium (34) zu dem magnetoresistiven Element (22); wobei die vordere Flußführung (24) praktisch in der Form eines Rechtecks geformt ist, das in einer Richtung der Breite der Aufzeichnungsspur (35) des Aufzeichnungsmediums (34) verlängert ist, um die Lesezone (22a) des magneto-' resistiven Elementes (22) zu überschreiten, und eine Richtung der Magnetisierungsvorzugsachse der vorderen Flußführung (24) zu der Richtung der Breite der Aufzeichnungsspur (35) parallel ist;
dadurch gekennzeichnet, daß: die vordere Flußführung (24) einen hervorspringenden Abschnitt (24a) hat, dessen exponierter vorderer Endabschnitt eine Breite hat, die kleiner als die Breite der Aufzeichnungsspur (35) ist, und daß die vordere Flußführung (24) in der vorderen Endfläche (26) des Kopfes nur an dem hervorspringenden Abschnitt (24a) exponiert ist und am übrigen Abschnitt von der vorderen Endfläche zurückgesetzt ist.

2. Magnetoresistiver Kopf nach Anspruch 1, ferner mit einer hinteren Flußführung (36), deren ein Ende mit dem anderen Ende des magnetoresistiven Elementes (22) magnetisch gekoppelt ist, bei dem die hintere Flußführung praktisch in der Form eines Rechtecks gebildet ist, das in der Richtung der Breite der Aufzeichnungsspur (35) des Aufzeichnungsmediums (34) verlängert ist, um die Lesezone (22a) des magnetoresistiven Elementes (22) zu überschreiten, und eine Richtung der Magnetisierungsvorzugsachse der hinteren Flußführung (36) zu der Richtung der Breite der Aufzeichnungsspur (35) parallel ist.

3. Magnetoresistiver Kopf (10) zum Reproduzieren von Informationen, die auf einem Aufzeichnungsmedium (34) aufgezeichnet sind, der umfaßt:
ein magnetoresistives Element (22) zum Konvertieren eines Signalmagnetfeldes, das aus einer Aufzeichnungsspur (35) des Aufzeichnungsmediums (34) austritt, in Widerstandsveränderungen, welches magnetoresistive Element (22) von einer vorderen Endfläche (26) des Kopfes, die dem Aufzeichnungsmedium (34) gegenüberliegt, zurückgesetzt ist; ein Paar von Anschlüssen (28a, 28b), die mit dem magnetoresistiven Element (22) verbunden sind und eine Lesezone (22a) des magnetoresistiven Elementes zwischen sich definieren; und eine vordere Flußführung (24), deren ein Ende in der vorderen Endfläche (26) des Kopfes exponiert ist und deren anderes Ende mit einem Ende des magnetoresistiven Elementes (22) magnetisch gekoppelt ist, zum Führen des Magnetflusses von dem Aufzeichnungsmedium (34) zu dem magnetoresistiven Element (22); wobei die vordere Flußführung (24) praktisch in der Form eines Rechtecks geformt ist, das in einer Richtung der Breite der Aufzeichnungsspur (35) des Aufzeichnungsmediums (34) verlängert ist, um die Lesezone (22a) des magnetoresistiven Elementes (22) zu überschreiten, und eine Richtung der Magnetisierungsvorzugsachse der vorderen Flußführung (24) zu der Richtung der Breite der Aufzeichnungsspur (35) parallel ist,
dadurch gekennzeichnet, daß: die vordere Flußführung (24) einen zentralen exponierten Abschnitt (24b) hat, der eine Breite hat, die kleiner als die Breite der Aufzeichnungsspur ist, und in der vorderen Endfläche (26) exponiert ist, und daß ein vorderer Rand der vorderen Flußführung (24) angeordnet ist, um sich in seinem Verlauf von dem zentralen exponierten Abschnitt (24b) hin zu beiden Enden nach und nach von der vorderen Endfläche des Kopfes zu entfernen.

4. Magnetoresistiver Kopf nach Anspruch 2, ferner mit Magnetfilmen (46), die über den gesamten Oberflächen der vorderen Flußführung (24) und der hinteren Flußführung (36) abgeschieden sind, welche Magnetfilme ausgewählt sind aus einer Gruppe bestehend aus einem antiferromagnetischen Film, einem permanentmagnetischen Film und einem ferrimagnetischen Film.

5. Magnetoresistiver Kopf nach Anspruch 1, ferner mit einem Magnetfilm (46), der über einer Oberfläche der vorderen Flußführung (24) abgeschieden ist, außer auf einem Abschnitt, der der Breite der Lesezone (22a) des magnetoresistiven Elementes (22) entspricht, welcher Magnetfilm ausgewählt ist aus einer Gruppe bestehend aus einem antiferromagnetischen Film, einem permanentmagnetischen Film und einem ferrimagnetischen Film.

6. Magnetoresistiver Kopf nach Anspruch 2, ferner mit Magnetfilmen (46), die über Oberflächen der vorderen Flußführung (24) und hinteren Flußführung (36) abgeschieden sind, außer auf Abschnitten, die der Breite der Lesezone (22a) des magnetoresistiven Elementes (22) entsprechen, welche Magnetfilme ausgewählt sind aus einer Gruppe bestehend aus einem antiferromagnetischen Film, einem permanentmagnetischen Film und einem ferrimagnetischen Film.

7. Magnetoresistiver Kopf nach Anspruch 1, ferner mit:
einem Magnetfilm (46), der über einer Oberfläche der vorderen Flußführung (24) abgeschieden ist, außer auf einem zentralen Abschnitt (47), dessen Breite an seinem einen Ende kleiner als die Breite der Aufzeichnungsspur (35) ist und an dem anderen Ende praktisch gleich der Breite der Lesezone (22a) ist, welcher Magnetfilm (46) ausgewählt ist aus einer Gruppe bestehend aus einem antiferromagnetischen Film, einem permanentmagnetischen Film und einem ferrimagnetischen Film.

8. Magnetoresistiver Kopf nach Anspruch 1, ferner mit einem Magnetfilm (46), der über einer Oberfläche der vorderen Flußführung (24) abgeschieden ist, außer auf einem zentralen Abschnitt (47a), der eine Breite hat, die der Breite der Lesezone (22a) des magnetoresistiven Elementes (22) entspricht, und einem vorderen Randabschnitt (48), des eine vorbestimmte Breite hat, welcher Magnetfilm (46) ausgewählt ist aus einer Gruppe bestehend aus einem antiferromagnetischen Film, einem permanentmagnetischen Film und einem ferrimagnetischen Film.

9. Magnetoresistiver Kopf nach Anspruch 3, ferner mit einem Magnetfilm (46), der über einer gesamten Oberfläche der vorderen Flußführung abgeschieden ist, außer auf dem hervorspringenden Abschnitt (24a), welcher Magnetfilm ausgewählt ist aus einer Gruppe bestehend aus einem antiferromagnetischen Film, einem permanentmagnetischen Film und einem ferrimagnetischen Film.

10. Magnetoresistiver Kopf nach Anspruch 2, bei dem wenigstens eine der vorderen Flußführung (24) und der hinteren Flußführung (36) mit dem magnetoresistiven Element (22) an wenigstens einem Abschnitt (50) überlappt ist, der der Breite der Lesezone (22a) des magnetoresistiven Elementes entspricht.

11. Magnetoresistiver Kopf nach irgendeinem vorhergehenden Anspruch, bei dem die Breite der Lesezone (22a) des magnetoresistiven Elementes (22) kleiner als die Breite der Aufzeichnungsspur (35) des Aufzeichnungsmediums (34) ist.

12. Magnetoresistiver Kopf nach irgendeinem vorhergehenden Anspruch, ferner mit:
einer nichtmagnetischen Isolierschicht (20), in der das magnetoresistive Element (22) und die Anschlüsse (28a, 28b) eingebettet sind; und
ersten und zweiten Magnetschirmen (16, 18), zwischen denen die nichtmagnetische Isolierschicht (20) angeordnet ist und die einen Spalt (25) in der vorderen Endfläche (26) des Kopfes zum Empfangen des Magnetflusses von dem Aufzeichnungsmedium (34) definieren.

13. Magnetoresistiver Kopf nach Anspruch 12, bei dem ein Abstand zwischen den ersten und zweiten Magnetschirmen (16, 18) wenigstens in der Lesezone (22a) des magnetoresistiven Elementes (22) gebildet ist, um größer als ein Abstand zwischen ihnen in der vorderen Endfläche (26) zu sein, und das magnetoresistive Element (22) dichter an dem ersten Magnetschirm (16) angeordnet ist.

14. Magnetoresistiver Kopf nach Anspruch 12, bei dem ein Abstand zwischen den ersten und zweiten Magnetschirmen (16, 18) an einem Abschnitt, an dem sie dem magnetoresistiven Element (22) gegenüberliegen, gebildet ist, um größer als ein Abstand zwischen ihnen in der vorderen Endfläche (26) zu sein, und das magnetoresistive Element (22) dichter an dem ersten Magnetschirm (16) angeordnet ist.

15. Magnetoresistiver Kopf nach Anspruch 13, ferner mit einem Zuführmittel (30), das mit dem Paar von Anschlüssen (28a, 28b) verbunden ist, zum Zuführen eines konstanten Lesestroms zu dem magnetoresistiven Element (22), bei dem
das magnetoresistive Element durch die ersten und zweiten Magnetschirme (16, 18), die durch ein Magnetfeld auf Grund des Lesestroms magnetisiert sind, magnetisch vorgespannt ist.

16. Magnetoresistiver Kopf nach Anspruch 12, bei dem der zweite Magnetschirm (18) mit dem ersten Magnetschirm (16) an einem Endabschnitt, der einem anderen Endabschnitt gegenüberliegt, an dem der Spalt (25) definiert ist, gekoppelt ist, und bei dem ein Abstand zwischen den ersten und zweiten Magnetschirmen (16, 18) in einem Mittelabschnitt zwischen dem anderen Endabschnitt, an dem der Spalt (25) definiert ist, und dem Endabschnitt, an dem die Kopplung erfolgt, gebildet ist, um größer als ein Abstand an dem anderen Endabschnitt zu sein, an dem der Spalt (25) definiert ist, welcher magnetoresistive Kopf ferner umfaßt:
eine Leiterspule (40) zum Aufzeichnen, die rings um den Endabschnitt, an dem die Kopplung erfolgt, herumgewunden ist, wobei jener Endabschnitt praktisch in ihrer Mitte liegt.

17. Magnetoresistiver Kopf nach irgendeinem vorhergehenden Anspruch, ferner mit:
einem Rückführungsjoch (44), das mit dem anderen Ende des magnetoresistiven Elementes (22) magnetisch gekoppelt ist, zum Zurückführen des Magnetflusses, der durch das magnetoresistive Element führte, zu dem Aufzeichnungsmedium (34).

18. Magnetoresistiver Kopf nach Anspruch 17 in Verbindung mit Anspruch 2, bei dem das Rückführungsjoch mit der hinteren Flußführung magnetisch gekoppelt ist.

## Revendications

1. Tête magnétorésistive (10) destinée à reproduire des informations enregistrées sur un support d'enregistrement (34),
comprenant :
un élément magnétorésistif (22) servant à convertir en des variations de résistance un champ magnétique, formant un signal, qui s'échappe d'une piste d'enregistrement (35) du support d'enregistrement (34), ledit élément magnétorésistif (22) étant en retrait d'une face terminale antérieure (26) de ladite tête placée en face dudit support d'enregistrement (34) ; une paire de bornes (28a, 28b) connectées audit élément magnétorésistif (22) et définissant entre elles une région de détection (22a) de l'élément magnétorésistif ; et un guide de flux antérieur (24), une extrémité de celui-ci étant exposée dans la face terminale antérieure (26) de ladite tête et son autre extrémité étant magnétiquement couplée à une extrémité dudit élément magnétorésistif (22), afin de guider le flux magnétique du support d'enregistrement (34) audit élément magnétorésistif (22) ; ledit guide de flux antérieur (24) étant pratiquement conformé suivant la forme d'un rectangle allongé dans la direction de la largeur de la piste d'enregistrement (35) dudit support d'enregistrement (34) de façon à dépasser de la région de détection (22a) dudit élément magnétorésistif (22), et la direction de l'axe facile d'aimantation dudit guide de flux antérieur (24) étant parallèle à la direction de la largeur de la piste d'enregistrement (35);
caractérisée en ce que ledit guide de flux antérieur (24) possède une partie en saillie (24a) dont la partie terminale antérieure exposée présente une largeur plus petite que la largeur de la piste d'enregistrement (35), et en ce que ledit guide de flux antérieur (24) n'est exposé, dans la face terminale antérieure (26) de ladite tête, qu'au niveau de ladite partie en saillie (24a) et est en retrait de ladite face terminale antérieure au niveau de la partie restante.

2. Tête magnétorésistive selon la revendication 1, comprenant en outre un guide de flux postérieur (36), dont une extrémité est magnétiquement couplée à l'autre extrémité dudit élément magnétorésistif (22), où ledit guide de flux postérieur est pratiquement conformé suivant la forme d'un rectangle allongé dans la direction de la largeur de la piste d'enregistrement (35) dudit support d'enregistrement (34) de façon à dépasser de la région de détection (22a) de l'élément magnétorésistif (22), et la direction de l'axe facile d'aimantation dudit guide de flux postérieur (36) est parallèle à la direction de la largeur de la piste d'enregistrement (35).

3. Tête magnétorésistive (10) destinée à reproduire des informations enregistrées sur un support d'enregistrement (34), comprenant :
un élément magnétorésistif (22) servant à convertir en des variations de résistance un champ magnétique, formant un signal, qui s'échappe d'une piste d'enregistrement (35) du support d'enregistrement (34), ledit élément magnétorésistif (22) étant en retrait d'une face terminale antérieure (26) de ladite tête placée en face dudit support d'enregistrement (34) ; une paire de bornes (28a, 28b) connectées audit élément magnétorésistif (22) et définissant entre elles une région de détection (22a) de l'élément magnétorésistif ; et un guide de flux antérieur (24), une extrémité de celui-ci étant exposée dans la face terminale antérieure (26) de ladite tête et son autre extrémité étant magnétiquement couplée à une extrémité dudit élément magnétorésistif (22), afin de guider le flux magnétique du support d'enregistrement (34) audit élément magnétorésistif (22) ; ledit guide de flux antérieur (24) étant pratiquement conformé suivant la forme d'un rectangle allongé dans la direction de la largeur de la piste d'enregistrement (35) dudit support d'enregistrement (34) de façon à dépasser de la région de détection (22a) dudit élément magnétorésistif (22), et la direction de l'axe facile d'aimantation dudit guide de flux antérieur (24) étant parallèle à la direction de la largeur de la piste d'enregistrement (35),
caractérisée en ce que ledit guide de flux antérieur (24) possède une partie exposée centrale (24b) dont la largeur est plus petite que la largeur de la piste d'enregistrement et qui est exposée dans ladite face terminale antérieure (26), et en ce qu'un bord antérieur dudit guide de flux antérieur (24) est conçu de façon à s'écarter progressivement de la face terminale antérieure de ladite tête en allant de la partie centrale exposée (24b) vers les deux extrémités.

4. Tête magnétorésistive selon la revendication 2, comprenant en outre des pellicules magnétiques (46) déposées sur la totalité des surfaces dudit guide de flux antérieur (24) et dudit guide de flux postérieur (36), lesdites pellicules magnétiques étant choisies dans le groupe constitué d'une pellicule antiferro-magnétique, d'une pellicule formant un aimant permanent, et d'une pellicule ferrimagnétique.

5. Tête magnétorésistive selon la revendication 1, comprenant en outre une pellicule magnétique (46) déposée sur la surface dudit guide de flux antérieur (24) à l'exception de la partie correspondant à la largeur de la région de détection (22a) dudit élément magnétorésistif (22), ladite pellicule magnétique étant choisie dans un groupe constitué d'une pellicule antiferromagnétique, d'une pellicule formant un aimant permanent, et d'une pellicule ferrimagnétique.

6. Tête magnétorésistive selon la revendication 2, comprenant en outre des pellicules magnétiques (46) déposées sur les surfaces dudit guide de flux antérieur (24) et dudit guide de flux postérieur (36) à l'exception des parties correspondant à la largeur de la région de détection (22a) dudit élément magnétorésistif (22), lesdites pellicules magnétiques étant choisies dans le groupe constitué d'une pellicule antiferromagnétique, d'une pellicule formant un aimant permanent, et d'une pellicule ferrimagnétique.

7. Tête magnétorésistive selon la revendication 1, comprenant en outre une pellicule magnétique (46) déposée sur la surface dudit guide de flux antérieur (24) à l'exception d'une partie centrale (47) dont la largeur, à sa première extrémité, est plus petite que la largeur de la piste d'enregistrement (35) et, à son autre extrémité, est pratiquement égale à la largeur de la région de détection (22a), ladite pellicule magnétique (46) étant choisie dans le groupe constitué d'une pellicule antiferromagnétique, d'une pellicule formant un aimant permanent, et d'une pellicule ferrimagnétique.

8. Tête magnétorésistive selon la revendication 1, comprenant en outre une pellicule magnétique (46) déposée sur la surface dudit guide de flux antérieur (24) à l'exception d'une partie centrale (47a) dont la largeur correspond à la largeur de la région de détection (22a) dudit élément magnétorésistif (22) et d'une partie bord antérieur (48) ayant une largeur prédéterminée, ladite pellicule magnétique (46) étant choisie dans le groupe constituée d'une pellicule antiferromagnétique, d'une pellicule formant un aimant permanent, et d'une pellicule ferrimagnétique.

9. Tête magnétorésistive selon la revendication 3, comprenant en outre une pellicule magnétique (46) déposée sur toute la surface dudit guide de flux antérieur à l'exception de ladite partie en saillie (24a), ladite pellicule magnétique étant choisie dans un groupe constitué d'une pellicule antiferromagnétique, d'une pellicule formant un aimant permanent, et d'une pellicule ferrimagnétique.

10. Tête magnétorésistive selon la revendication 2, où au moins un desdits guides de flux antérieur (24) et de flux postérieur (36) est en chevauchement avec ledit élément magnétorésistive (22) sur au moins une partie (50) correspondant à la largeur de la région de détection (22a) dudit élément magnétorésistif.

11. Tête magnétorésistive selon l'une quelconque des revendications précédentes, où la largeur de ladite région de détection (22a) dudit élément magnétorésistif (22) est plus petite que la largeur de la piste d'enregistrement (35) du support d'enregistrement (34).

12. Tête magnétorésistive selon l'une quelconque des revendications précédentes, comprenant en outre :
une couche d'isolation non magnétique (20) dans laquelle sont immergés ledit élément magnétorésistif (22) et lesdites bornes (28a, 28b); et
des premier et deuxième blindages magnétiques (16, 18) entre lesquels ladite couche isolante non magnétique (20) est interposée et qui définissent un intervalle (25) dans la face terminale antérieure (26) de ladite tête afin de recevoir le flux magnétique du support d'enregistrement (34).

13. Tête magnétorésistive selon la revendication 12, où la distance de séparation entre lesdits premier et deuxième blindages magnétiques (16, 18), au moins dans la région de détection (22a) dudit élément magnétorésistif (22), est formée de façon à être plus grande que la distance les séparant dans la face terminale antérieure (26), et l'élément magnétorésitif (22) est disposé plus près dudit premier blindage magnétique (16).

14. Tête magnétorésistive selon la revendication 12, où la distance de séparation entre lesdits premier et deuxième blindages magnétiques (16, 18), en une partie où ils sont placés en face dudit élément magnétorésitif (22), est formée de façon à être plus grande que la distance qui les sépare dans la face terminale antérieure (26), et ledit élément magnétorésitif (22) est disposé plus près dudit premier blindage magnétique (16).

15. Tête magnétorésistive selon la revendication 13, comprenant en outre un moyen d'alimentation (30) connecté à ladite paire de bornes (28a, 28b) et servant à fournir un courant de détection constant audit élément magnétorésistif (22), où :
ledit élément magnétorésistif est polarisé magnétiquement par lesdits premier et deuxième blindages magnétiques (16, 18) aimantés par un champ magnétique dû audit courant de détection.

16. Tête magnétorésistive selon la revendication 12, où ledit deuxième blindage magnétique (18) est couplé audit premier blindage magnétique (16) en une partie terminale opposée à une autre partie terminale où ledit intervalle (25) est défini, et où la distance de séparation entre lesdits premier et deuxième blindages magnétiques (16, 18), en une partie médiane qui se trouve entre l'autre partie terminale où l'intervalle (25) est défini et la partie terminale où le couplage est réalisé, est formée de façon à être plus grande que la distance existant à l'autre partie terminale où l'intervalle (25) est défini, ladite tête magnétorésistive comprenant en outre :
une bobine de conducteur (40), servant à enregistrer, qui est bobinée autour de la partie terminale où le couplage est réalisé, la bobine ayant cette partie terminale pratiquement en son centre.

17. Tête magnétorésistive selon l'une quelconque des revendications précédentes, comprenant en outre :
une culasse de retour (44) qui est magnétiquement couplée à l'autre extrémité dudit élément magnétorésistif (22) afin de ramener au support d'enregistrement (34) le flux magnétique qui est passé dans ledit élément magnétorésistif.

18. Tête magnétorésistive selon la revendication 17, dépendant de la revendication 2, où ladite culasse de retour est magnétiquement couplée audit guide de flux postérieur.
